# EUROPEAN PATENT APPLICATION

(11) **EP 3 244 609 A1**
(43) Date of publication of application: **15.11.2017**
(21) Application number: 17174825.4
(22) Date of filing: 23.06.2011
(51) Int. Cl.: H04N 5/445, H04N 21/482

(54) **DISPLAY APPARATUS AND CONTENTS SEARCHING METHOD THEREOF**

(30) Priority: 03.12.2010 KR 20100122924
(62) Divisional of application: 11171136.2
(71) Applicant: Samsung Electronics Co., Ltd., Suwon-si, Gyeonggi-do 443-742 (KR)
(72) Inventor: HAN, Kum-yon, Gyeonggi-do (KR)
(74) Representative: Appleyard Lees IP LLP

(57) **Abstract**

A display apparatus includes a display unit; a plurality of application units which provides contents; and an integrated searching unit which controls the plurality of application units to search contents with respect to an input search word, and displays on the display unit the contents searched by the application units.

## Description

### BACKGROUND

### 1. Field

Apparatuses and methods consistent with the exemplary embodiments relate to a display apparatus and a contents searching method thereof, and more particularly, to a display apparatus and a contents searching method thereof which receives contents from the Internet.

### 2. Description of the Related Art

In line with technological development, electronic goods which are equipped with various functions for improved convenience and functionality have been introduced. In particular, such electronic goods have an Internet function which is backed by the development of network infrastructure and the Internet.

Out of such multi-functional electronic goods, a TV integrates an Internet access function thereinto to be connected to the Internet. Also, a TV which is connected to the Internet through a relay such as a set-top box is being released. Further, an Internet TV service which connects a TV to the Internet for viewing video online is drawing much attention from viewers. A user may view multimedia contents stored in a server of an Internet TV service provider from his/her TV.

As such, a user may now enjoy various multimedia contents by using the TV supporting the Internet service.

To that end, a method for easily searching contents on the Internet or contents through other means than the Internet access should be provided.

### SUMMARY

Accordingly, an aspect of one or more exemplary embodiments provides a display apparatus and a contents searching method thereof which easily searches contents through a plurality of application units providing contents.

An aspect of an exemplary embodiment provides a display apparatus and a contents searching method thereof which easily searches contents with respect to an application unit that does not provide a searching function.

An aspect of an exemplary embodiment provides a display apparatus including: a display unit; a plurality of application units which provides contents; and an integrated searching unit which controls the plurality of application units to search contents with respect to an input search word, and displays on the display unit the contents searched by the application units.

The display apparatus further may includes a broadcasting receiver which receives a broadcasting signal, wherein the application units comprise an electronic program guide (EPG) executor which displays broadcasting information based on the broadcasting signal.

The application units may receive contents from a predetermined contents provider through the Internet.

The display apparatus further may includes a communication unit which performs a network communication with an external device, wherein the application units search contents comprised in the external device through the communication unit.

The display apparatus further may includes a connector which is connected to an external device, wherein the application units search contents comprised in the external device connected to the connector.

The display apparatus further may includes a storage unit which stores therein contents, wherein the application units search contents stored in the storage unit.

The integrated searching unit may display on the display unit a search list of searched contents.

The integrated searching unit may control the application units to execute a selected content if the content is selected from the search list.

An aspect of another exemplary embodiment provides a contents searching method of a display apparatus, the method including: installing a plurality of application units which provides contents; receiving a signal to input a search word; controlling the application units to search contents for the search word; and displaying a searched content.

An aspect of another exemplary embodiment provides a contents searching method of a display apparatus, the method including: providing a plurality of application units each of which includes a set of contents; receiving a signal to input a search word; searching all of the sets of contents of the plurality of application units based on the search word; and displaying a subset of contents from among the sets of contents, the subset of contents corresponding to the search word.

At least one of the plurality of application units may receive the respective set of contents through a broadcast signal, and at least one of the plurality of application units may receive the respective set of contents through the Internet.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a control block diagram of a display apparatus according to an exemplary embodiment;
FIG. 2 illustrates an application unit which is displayed in the display apparatus according to the exemplary embodiment;
FIG. 3 illustrates an integrated search result which is displayed in the display apparatus according to the exemplary embodiment;
FIG. 4 illustrates a contents execution result from the integrated search result in FIG. 3;
FIG. 5 is a control flowchart of a contents searching method of the display apparatus according to the exemplary embodiment;
FIG. 6 illustrates a display apparatus according to another exemplary embodiment; and
FIG. 7 is a control block diagram of the display apparatus according to the another exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. Expressions such as "at least one of," when preceding a list of elements, modify the entire list and not the individual elements of the list.

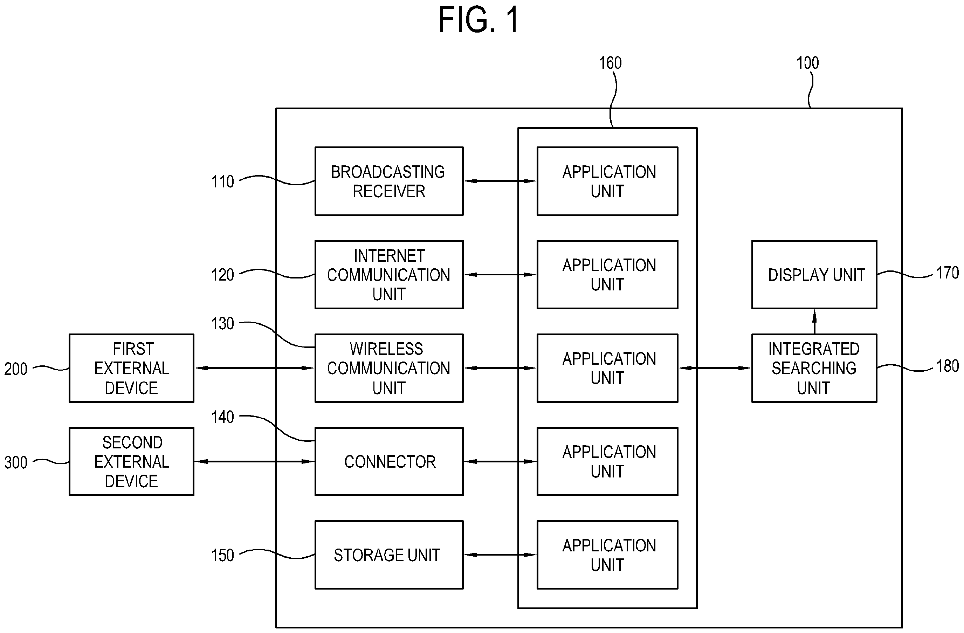

FIG. 1 is a control block diagram of a display apparatus according to an exemplary embodiment.

As shown therein, a display apparatus 100 according to the present exemplary embodiment includes a broadcasting receiver 110, an Internet communication unit 120, a wireless communication unit 130, a connector 140, a storage unit 150, a plurality of application units 160, a display unit 170, and an integrated searching unit 180. The display apparatus 100 may include an Internet TV or a smart TV which receives various services through an Internet protocol; or a personal terminal such as, for example, a personal computer (PC), a mobile phone, a smart phone, a portable multimedia player (PMP), a netbook, a laptop computer and an e-book device. The display apparatus 100 includes devices which receive, display and execute contents from various contents providers through the Internet connection. The display apparatus 100 may have an application installed and executed to execute and display contents. The contents according to the present exemplary embodiment refers to all of information which can be displayed, played and embodied by the display apparatus 100, including, for example, a broadcasting signal, a text, a photo, a still image, a video, a movie and a music.

The broadcasting receiver 110 includes an antenna or a tuner which receives and processes a broadcasting signal from a broadcasting station. The broadcasting signal may include an airwave broadcasting, a cable broadcasting and a satellite broadcasting. The broadcasting receiver 110 may include a cable connector which receives a broadcasting signal from a cable broadcasting station. The broadcasting signal includes a sound signal, an image signal and a data signal, and may further include electronic program guide (EPG) information on broadcasting programs. The EPG includes channel information of a broadcasting signal, program information by channel and program schedule information.

The Internet communication unit 120 includes a communication module which is connected to the Internet network in a wired or wireless manner. The Internet communication unit 120 communicates with various contents providers to receive contents such as, for example, music files, still images, texts and videos, and to transmit various control signals input by a user to the contents providers.

The wireless communication unit 130 communicates with a first external device 200 which is located remotely from the display apparatus 100 through a wireless network. The wireless communication unit 130 may include a communication module corresponding to various communication methods such as Bluetooth®, Wi-Fi™, Zigbee, infrared (IR) communication, radio frequency (RF) communication and other wired communications.

Middleware which supports a home networking to share digital contents such as music, photos, and videos stored in electronic devices such as home computers, home appliances and portable terminals includes Universal Plug and Play (UPnP), Home Audio Interoperability (HaVi), Jini, Video Electronics Standards Association (VESA), Digital Living Network Alliance (DLNA) or the like. The wireless communication unit 130 according to the present exemplary embodiment may communicate with the first external device 200 by open standards, e.g., DLNA established on the basis of the industrial standards such as HTTP, UPnP and Wi-Fi. The DLNA focuses on sharing all of contents provided by TVs, VCRs, digital cameras or audio systems. The DLNA supports acquisition, transmission and management of various digital media contents (e.g., photos, music and videos) from personal devices such as mobile devices and PCs. The wireless communication unit 130 and the first external device 200 may transmit and receive account information on contents providers through a DLNA-based networking.

The connector 140 acts as an interface to which an external connector is connected, other than the storage unit 150 of the display apparatus 100. The connector 140 may include a connection port to be connected to a second external device 300 such as a portable storage medium including a USB memory stick, or a wired network connector to be connected to the second external device 300 including a storage unit.

The storage unit 150 includes a memory, which is provided in the display apparatus 100 to store therein contents, including, for example, still images such as photos, videos, music files and movies. The storage unit 150 may include a hard disk driver (HDD) used when a personal video recorder (PVR) function is executed, or a non-volatile memory such as a flash memory.

The application units 160 includes application programs which are installed in the display apparatus 100 to execute various contents. The application units 160 search contents corresponding to an input search word or contents including the search word, and execute the selected contents by a control of the integrated searching unit 180. The application programs may be stored during a manufacturing process of the display apparatus 100, or downloaded from contents providers through a wired or wireless Internet network. The application units 160 may include an EPG executor which displays EPG information included in a broadcasting signal, an application program which accesses a social network service (SNS) website to receive contents therefrom, an application program which is connected to an external device in a wired or wireless manner to receive contents therefrom, an application program which searches and executes a video by video on demand (VOD) service, and a browser which browses stored contents. A player which searches and plays various multimedia is also included in the application units 160.

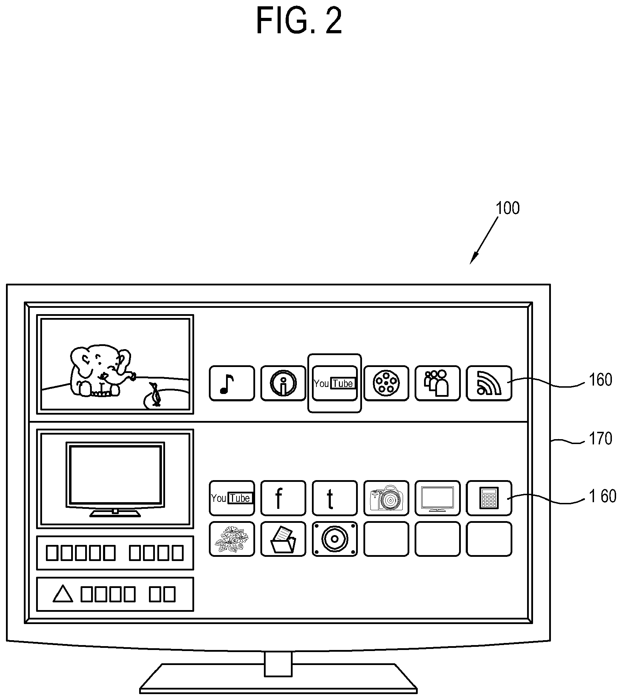

FIG. 2 illustrates the application units 160 displayed in the display apparatus 100 according to the present exemplary embodiment. As shown therein, the display unit 170 displays thereon the plurality of application units 160 as a graphic user interface (GUI), which is installed in the display apparatus 100.

The application units 160 may have a searching function to search contents individually. A user may select the application units 160 and search contents of a particular contents provider. For example, if the application units 160 include an application program accessing Twitter as one of the SNS, a user may access Twitter, search a particular search word and view search results. That is, each of the application units 160 may have a searching function, respectively.

The display unit 170 displays thereon contents received from various contents sources, and displays a contents list searched by the integrated searching unit 180. The display unit 170 includes a liquid crystal display (LCD) panel including liquid crystal, an organic light emitting diode (OLED) panel including an organic light emitting element, or a plasma display panel (PDP), and includes a panel driver to drive the panel.

The display apparatus 100 may include various signal processors (not shown) to process received contents for a display by the display unit 170. The signal processors may include an image processing block such as a decoder, a scaler and an enhancer, and a sound processing block.

The foregoing elements are divided by function to explain contents sources acquired by the display apparatus 100, but may not be divided physically. The broadcasting receiver 110 and the Internet communication unit 120 may be formed integrally, and the Internet communication unit 120 and the wireless communication unit 130 may also be formed integrally.

According to another exemplary embodiment, the display apparatus 100 may be connected to a set-top box which receives a broadcasting and is connected to an image source. In this case, the broadcasting receiver 110, the Internet communication unit 120, the wireless communication unit 130, the connector 140 and the storage unit 150 may be provided in the set-top box. The application units 160 may search contents from various contents sources connected to the set-top box, and may execute the selected contents.

The integrated searching unit 180 controls the plurality of application units 160 to search contents with respect to an input search word, and displays on the display unit 170 contents searched by the application units 160. Further, the integrated searching unit 180 controls the plurality of application units to search the plurality of contents with respect to an input search word to determine a subset of contents based on the input search word, and displays on the display unit 170 the subset of contents. Accordingly, a user may search all of contents which may be displayed or played by the display apparatus 100. Once a GUI of an input bar is displayed on the display unit 170 to receive a user's input for an integrated search word and a user inputs a search word, the integrated searching unit 180 controls the application units 160 to perform their respective searching functions. Contents which are searched by the application units 160 are provided to a user through a GUI supported by the integrated searching unit 180.

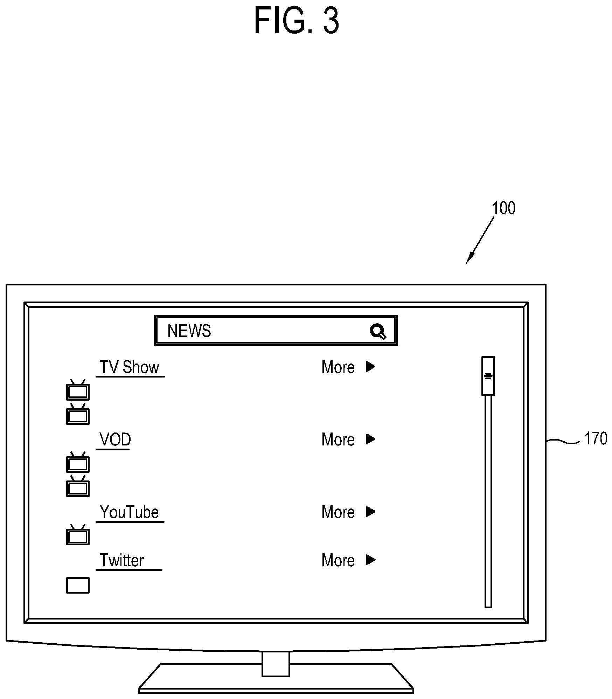

The integrated searching unit 180 according to the present exemplary embodiment displays on the display unit 170 a search list of searched contents or a search list of the subset of contents. FIG. 3 illustrates integrated search results displayed on the display unit 170. As shown therein, contents items searched from the EPG information of the broadcasting signal, contents items searched from Youtube and items searched from Twitter are listed. A user may acquire all of contents information relating to the search word by a single input of the search word without executing the plurality of application units 160 to search contents. That is, the display apparatus 100 which includes the plurality of application units 160 realizes an integrated search by an individual searching function of the application units 160 by a control of the integrated searching unit 180.

In addition, a user may individually execute the application units 160 to acquire search results from a particular content source.

The display apparatus 100 may further include a remote controller (not shown) which includes a text button and a direction button for a user to input a search formula. The remote controller may include a touch pad or a touch screen or may further include a qwerty keyboard for a user's input of texts. The display apparatus 100 may include a keyboard and a mouse as a user input unit.

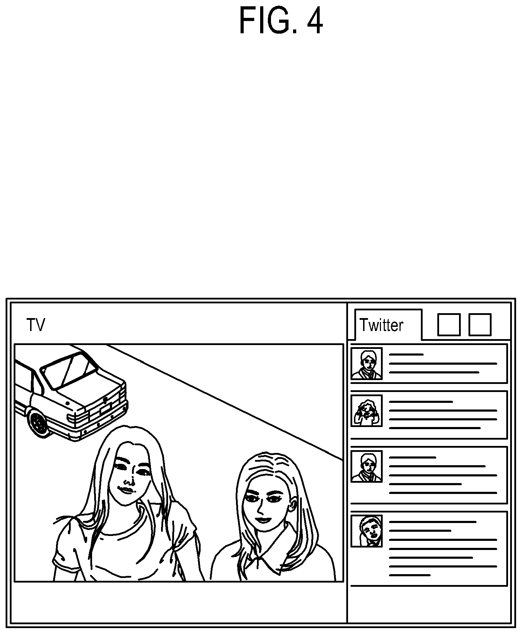

A user may select one of the contents displayed in the search list. Then, the application units 160 execute the selected content and display the selected content on the display unit 170. FIG. 4 illustrates a content execution result from the integrated search result in FIG. 3. As shown therein, an image of the content accompanying a particular website is displayed.

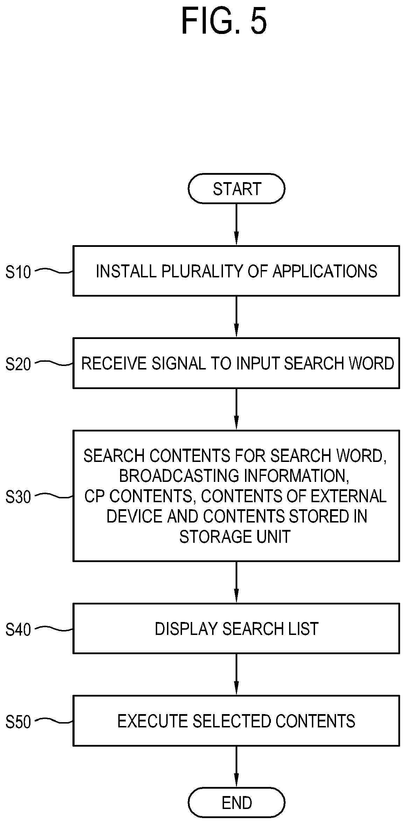

FIG. 5 is a control flowchart of a contents searching method of the display apparatus 100 according to an exemplary embodiment. The contents searching method according to the present exemplary embodiment will be described with reference to FIG. 5.

The plurality of application units 160 which provides contents is installed by a user (S10).

The performance of the integrated searching function is selected, the GUI including the input bar is displayed and a signal inputting a search word by a user is received (S20).

The integrated searching unit 180 controls the application units 160 and searches contents relating to the input search word (S30). The application units 160 may search broadcasting information, search contents of the contents providers, or contents which may be acquired by a network communication such as DLNA or a USB storage medium. The application units 160 may also search contents stored in the storage unit 150 of the display apparatus 100.

The integrated searching unit 180 displays a search list or a search list of the subset of contents of information on the contents searched by the application units 160 (S40).

A user may select a desired content from the search list or the search list of the subset of contents, and the application units 160 execute the selected contents (S50).

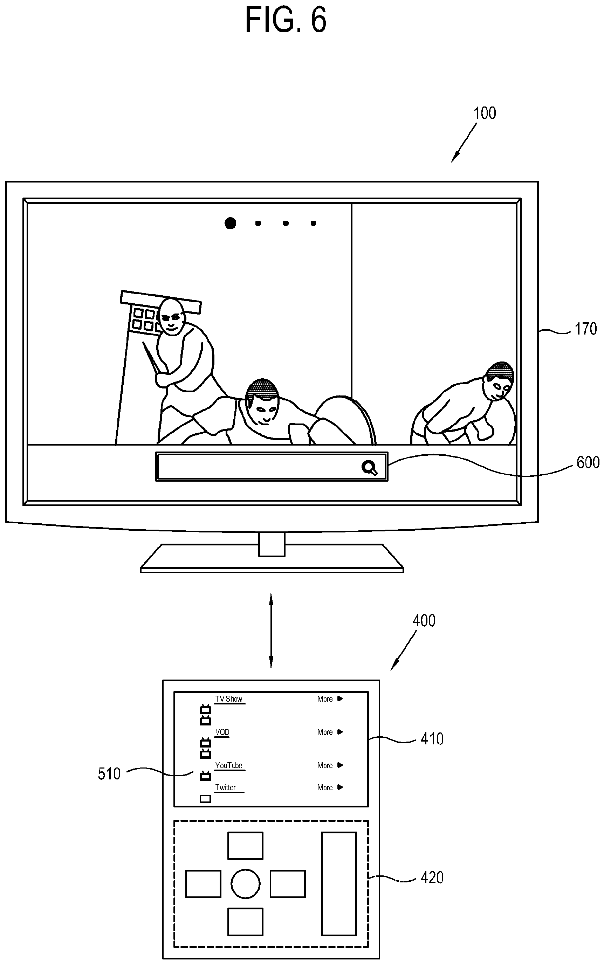

FIG. 6 illustrates a display apparatus according to another exemplary embodiment.

As shown therein, if a search signal is input to execute a searching function, an input bar 500 is displayed on the display unit 170 to input a search word, and a search list 510 as a search result may be displayed in an external user input device 400. The user input device 400 may include a sub display unit 410 such as an LCD screen or a touch screen. The sub display unit 410 displays thereon the search result 510 received from the display apparatus 100, and a user may select one of the contents from the search list 510 displayed in the user input device 400. The user input device 400 may further include a plurality of buttons 420 to receive a user's input.

The user input device 400 may be provided as an element of the display apparatus 100 such as a typical remote control device, or a separate device such as a portable terminal. The user input device 400 communicates with the display apparatus 100, receives information such as the search result 510 and transmits a user's selection signal to the display apparatus 100.

If a user selects one of the contents displayed in the search list 510, the executed content may be displayed on at least one of the display unit 170 and the sub display unit 410.

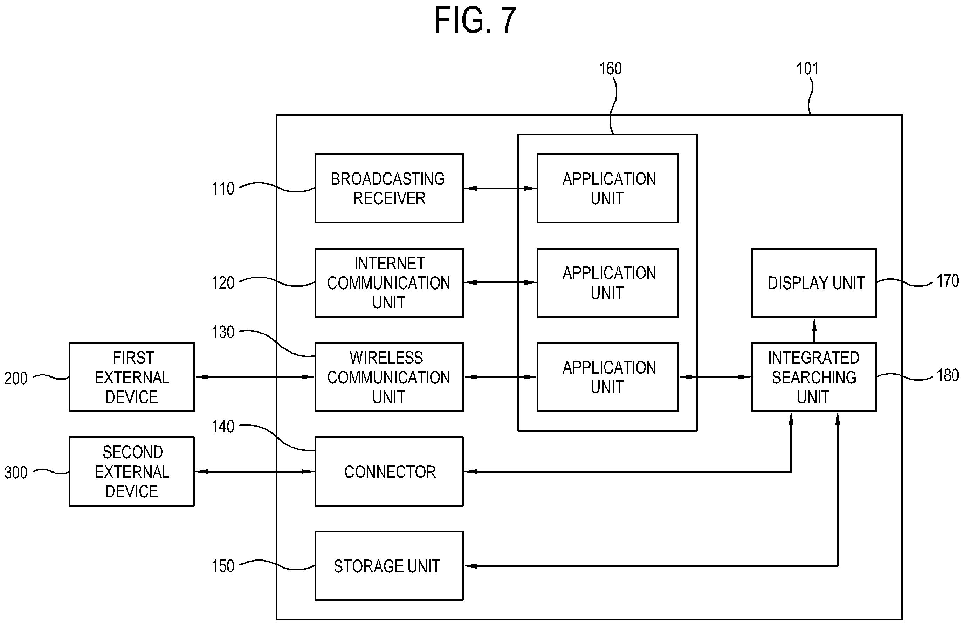

FIG. 7 is a control block diagram of a display apparatus according to another exemplary embodiment.

As shown therein, contents provided by a connector 140 according to the present exemplary embodiment and contents stored in the storage unit 150 are searched by the integrated searching unit 180 instead of by the application units 160. If a user inputs a search word, the integrated searching unit 180 determines whether a search function exists, with reference to a configuration of the application units 160 installed in the display apparatus 101, and controls the application units 160 having the searching function to search contents. If it is determined that there is an application excluding the searching function, the integrated searching unit 180 directly searches the contents and displays a search list of contents.

If the application units 160 are newly installed, the integrated searching unit 180 may perform an integrated search based on the configuration of the application units 160. In the case of an application program which is provided by a third party instead of a manufacturer of the display apparatus 101, it will be programmed to be accessed by the integrated searching unit 180 and to display a search result by a control of the integrated searching unit 180.

As described above, a display apparatus and a contents searching method thereof according to an exemplary embodiment searches contents without difficulty through a plurality of application units.

Also, a display apparatus and a contents searching method thereof according to another exemplary embodiment searches contents without difficulty with respect to an application unit which does not provide a searching function.

Although a few exemplary embodiments have been shown and described, it will be appreciated by those skilled in the art that changes may be made in these exemplary embodiments without departing from the principles and spirit of the inventive concept, the range of which is defined in the appended claims and their equivalents.

## Claims

1. A broadcasting display apparatus (100) comprising:
a display (170);
a storage unit (150) configured to store a first application and a second application, each of the first application and the second application having an individual content search function to search a content corresponding a keyword input when the first application or the second application is executed; and
a processor (180) configured to control the display:
to display icons corresponding to the first application and the second application, the first application or the second application being executed when a corresponding icon is selected,
to display an image based on a broadcasting signal,
to display a graphical user interface (GUI) for an integrated search function while the image based on the broadcasting signal is displayed, and
to display integrated searched results with respect to a keyword input through the GUI, the integrated searched results being classified by a plurality of subsets associated with the first application and the second application respectively,
wherein if a content of a first subset associated with the first application is selected among the integrated searched results, the processor executes the first application to display the selected content of the first subset, and
wherein if a content of a second subset associated with the second application is selected among the integrated searched results, the processor executes the second application to display the selected content of the second subset.

2. The broadcasting display apparatus (100) according to claim 1, wherein each of the first application and the second application is configured to receive at least one of contents from a predetermined contents provider through a network communication.

3. The broadcasting display apparatus (100) according to claim 1 or 2, further comprising a communication unit (130) configured to perform a network communication with an external device,
wherein each of the first application and the second application is configured to search at least one of contents included in the external device through the communication unit.

4. The broadcasting display apparatus (100) according to one of claims 1 to 3, further comprising a connector (140) arranged to be connected to an external device,
wherein each of the first application and the second application is configured to search at least one of contents included in the external device connected to the connector.

5. The broadcasting display apparatus (100) according to one of claims 1 to 4, wherein the processor (180) is configured to control to search contents with the keyword input through the GUI by the first application and the second application respectively, and
in response to the selection among the integrated searched results, the processor (180) is configured to display at least one content selected among the integrated searched results including the searched contents by the first application and the second application.

6. The broadcasting display apparatus (100) according to one of claims 1 to 4, wherein in response to the keyword being input and an application stored in the storage unit (150) being selected through the GUI, the processor (180) is configured to control to search content with the keyword by the selected application to display the searched content.

7. The broadcasting display apparatus (100) according to one of claims 1 to 6, wherein the first application or the second application is at least one of an electronic program guide (EPG) executor which displays broadcasting information based on the broadcasting signal, an application which accesses a social network service (SNS) website, an application program which is connected to an external device in a wired or wireless manner, an application program which searches and executes a video by video on demand (VOD) service, and a browser which browses stored contents.

8. A control method of a broadcasting display apparatus (100) comprising:
displaying icons corresponding to a first application and a second application, the first application or the second application being executed when a corresponding icon is selected;
displaying an image based on a broadcasting signal;
displaying a GUI for an integrated search function while the image based on the broadcasting signal is displayed; and
displaying integrated searched results with respect to a keyword input through the GUI, the integrated searched results being classified by a plurality of subsets associated with a first application and a second application respectively, each of the first application and the second application having an individual content search function to search a content corresponding the keyword input when the first application or the second application is executed;
wherein the displaying integrated searched results comprising:
if a content of a first subset associated with the first application is selected among the integrated searched results, executing the first application to display the selected content of the first subset, and
if a content of a second subset associated with the second application is selected among the integrated searched results, executing the second application to display the selected content of the second subset.

9. The control method according to claim 8, wherein each of the first application and the second application is configured to receive at least one of contents from a predetermined contents provider through a network communication.

10. The control method according to claim 8 or 9, wherein each of the first application and the second application is configured to search at least one of contents included in an external device communicating with or connecting to the broadcasting display apparatus.

11. The control method according to one of claims 8 to 10, wherein the displaying integrated searched results further comprising:
controlling to search contents with the keyword input through the GUI by the first application and the second application respectively, and
in response to the selection among the integrated searched results, displaying at least one content selected among the integrated searched results including the searched contents by the first application and the second application.

12. The control method according to one of claims 8 to 10, wherein the displaying integrated searched results comprising:
in response to the keyword being input and an application being selected through the GUI, controlling to search content with the keyword by the selected application to display the searched content.

13. The control method according to one of claims 8 to 12, wherein the first application or the second application is at least one of an EPG executor which displays broadcasting information based on the broadcasting signal, an application which accesses a SNS website, an application program which is connected to an external device in a wired or wireless manner, an application program which searches and executes a video by VOD service, and a browser which browses stored contents.
